# EUROPEAN PATENT SPECIFICATION

(11) **EP 2 051 123 B1**
(45) Date of publication and mention of the grant of the patent: **05.01.2011**
(21) Application number: 08014012.2
(22) Date of filing: 05.08.2008
(51) Int. Cl.: G02B 23/16

(54) **Telescopic tube**
Teleskoprohr
Tube télescopique

(30) Priority: 27.11.2007 TW 96144920; 18.10.2007 CN 200710163695
(43) Date of publication of application: 22.04.2009
(73) Proprietor: SUZHOU SYNTA OPTICAL TECHNOLOGY CO., LTD, New District Suzhou (CN)
(72) Inventor: Shen, Dar-Tson, Taoyuan County 325 (TW)
(74) Representative: TER MEER - STEINMEISTER & PARTNER GbR

(56) References cited:
- CN-A- 101 135 771
- GB-A- 1 473 845
- US-A1- 2002 039 228
- US-A1- 2005 183 377

## Description

### BACKGROUND OF THE INVENTION

### 1. Field of the Invention

The present invention relates to a field of telescope components, and in particular to a telescopic tube that can be used in a Newtonian reflector.

### 2. Description of Prior Art

A reflector is one of the three major astronomical telescopes. The reflector utilizes lenses and reflecting mirrors to condense the light, thereby forming an image. The light passes thorough a major condensing reflecting mirror and is sequentially reflected to a second reflecting mirror and an eyepiece. In this way, an observer can utilize the eyepiece to observe a target. The Newtonian reflector is one that is commonly used for an astronomical telescope. It utilizes a reflecting mirror having a concave or spherical surface to condense the light that passes through the lens. Thereafter, the condensed light is reflected to a planar reflecting mirror located at the front end of the tube. Then, the planar reflecting mirror reflects the light into the eyepiece outside the telescope, so that the observer can observe the target. Since the cost of the reflecting mirror used in the reflector is much lesser than that of a lens, and the whole structure of the reflector is simple, it is very suitable to observe some dimmer galaxies or nebulas outside the Galaxy. Sometimes, it is feasible to use this kind of telescope to observe the moon or other planets. Further, the Newtonian reflector, especially the Dobsonians reflector supported by a simple bracket, is very popular for the astronomical observers.

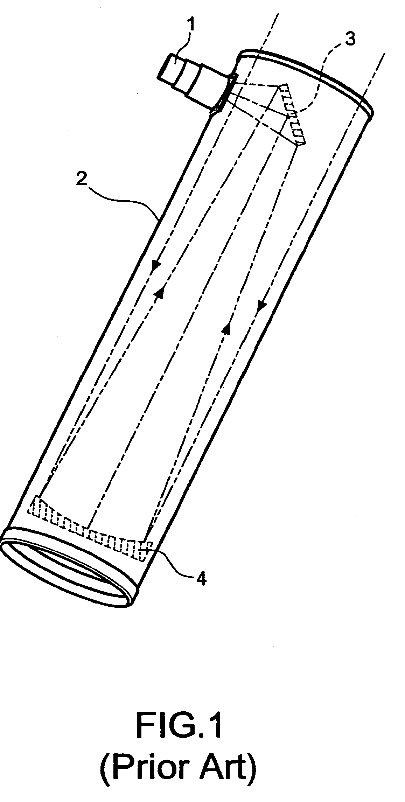

As shown in Fig. 1, the main body of the current Newtonian reflector is constituted of a tube 2, an object lens 4, a reflecting mirror 3 and an eyepiece 1. The bottom end inside the tube is provided with a glass-made object lens having a spherical or parabolic surface coated with a reflective material, which reflects and condenses the parallel lights entering the tube to a point. Then, via the reflecting mirror located on an upper end inside the tube and fixed in front of the focus, which is a small planar mirror, the reflected light from the object lens can be reflected at a right angle into the eyepiece provided on an edge outside the tube, thereby magnifying the image to obtain a picture like that available in a common telescope. The tube is used as a support for each major part in a light path, and in particular, is used to support an object lens of a large weight and a mount for the object lens. Therefore, the tube must have sufficient strength, and is often made from a metal or plastic material that has a high strength and low degree of deformation. The inner diameter of the tube is larger than that of the object lens by 2-3mm, thereby facilitating the installation and adjustment of the object lens. In general, the length of the tube is at least identical to the focus distance of the objective lens. If the length of the tube is too short, the focus of the major lens may extend beyond the tube by a long distance. Unless the size of a secondary mirror is large enough, some light may lose at the edge of the visual field when the observer chooses a wide-angle eyepiece. In comparison with a reflecting tube, the length of the tube of the Newtonian reflector is only eight times of the diameter of the object lens, which is approximately one half of the reflecting tube. However, for a reflector having a larger diameter of object lens, the length of the tube is still too large. The larger the diameter of the telescope is, the larger the ability of condensing is. As a result, the number of the objects that can be observed is larger. Further, the larger the diameter of the object lens is, the higher the resolution is. Therefore, in order to increase the ability of condensing, the only way is to increase the diameter of the telescope, which in turn has to increase the length of the tube of the telescope. The length of the tube of the current middle-sized Newtonian reflector even achieves 1.0 to 2.0m. In addition, the brackets for mounting the lens and mirrors also increase the whole weight and volume greatly, which increases the difficulty in transferring the telescope and the accommodating space for the observer. When the observer intends to transfer the telescope to a desired location, such a huge telescope cannot be disposed in a common car. Further, the large weight of the tube also hinders the transferring operation.

Therefore, in view of the above drawbacks of prior art, the inventor of the present invention has proposed a novel and inventive structure based on his expert experience and researches.

US 2002/0039228 A1 describes a reflector telescope with an adjustable secondary mirror assembly. Herein, a telescope tube assembly supports a primary mirror assembly, an inner secondary mirror assembly, an outer secondary mirror assembly, and an outer end collar, which are connected by three rod elements made of a metal tubing or rod being aligned with the axial direction of the tube elements. The primary mirror assembly tends to be pointed to the ground when the telescope is used to view the sky, wherein the outer end collar is located oppositely to the primary mirror assembly and is open to allow the entrance of light. The outer end collar and the primary mirror assembly are mounted fixedly to the rod elements, wherein the inner and outer secondary mirror assemblies are supported slidably by means of cylindrical bearings, thus the secondary mirror assemblies can slide along the frame tube elements of the telescope tube assembly, allowing the distance between the primary and secondary mirrors to be regulated.

GB-A-1 473 845 describes a telescope. Herein, the telescope comprises an inner tube having a concave main mirror mounted on a support in one end the tube, and an outer tube having a collecting mirror mounted therein. The inner tube is movable telescopically with respect to the outer tube by a handle on the support between a retracted position and an extended position. This functionality is provided by four guide tracks being equally spaced about the inside of the outer tube and each comprising a channel section having inwardly directed flanges at the three ends of its limbs. Stude fixed to and extending from the inner tube and having enlarged heads complementary to the tracks are slidably received in the tracks so that the inner tube is slidingly supported in the outer tube, wherein a rotation of the inner tube in the outer tube is prevented.

### SUMMARY OF THE INVENTION

It is an object of the present invention to provide a telescopic tube with a reasonable structure, reduced weight, adjustable length and easy operation.

This object is solved by a telescopic tube according to claim 1. Further advantages, refinements and embodiments of the invention are described in the respective sub-claims.

The subject-matter of the present invention can solve the problem existed in the current Newtonian reflector that the volume and weight of the tube are too large after the condensing ability and the resolution of the reflector are increased. Therefore, the present invention not only can allow the Newtonian reflector to satisfy high condensing ability and resolution, but also can reduce the volume and weight thereof, thereby facilitating the storage and transferring operation.

The present invention is to provide a telescopic tube including an upper section; a lower section tube provided coaxially with the upper section tube; and a plurality of connecting rods connected between the upper and lower section tubes and in parallel to the axis of the tube. Via the above arrangement, the upper and lower section tubes can slide telescopically on the connecting rods in the axial direction of the tube, thereby obtaining a telescopic tube.

Specifically, the upper section tube is fixed to one end of the connecting rod, and the lower section tube is provided thereon with sliding sleeves for allowing the connecting rods to pass through respectively. The other end of the connecting rod penetrates into the sliding sleeve and slides in the sliding sleeve in the axial direction of the tube.

The sliding sleeve is provided thereon with a locking means. The locking means is a bolt that penetrates through a screw hole provided on the sliding sleeve and mates with the screw hole. One end of the bolt abuts against the connecting rod in the sliding sleeve, and the other end thereof is provided with a handgrip.

The sliding sleeve is provided thereon with an elastic positioning pin. An elastic telescopic head of the elastic positioning pin extends into the sliding sleeve and is slidably connected to the connecting rod. The connecting rod is provided thereon with positioning troughs for mating with the elastic telescopic head. When the connecting rod extends to a certain position, the elastic telescopic head is inserted into one of the positioning troughs to position the connecting rod.

A lower outer wall of the upper section tube is provided with an upper fixing sleeve. The upper fixing sleeve is fixed to one end of the connecting rod. An upper outer wall of the lower section tube is provided with a lower fixing sleeve. The lower fixing sleeve is provided thereon with a sliding sleeve for allowing the connecting rod to pass through. After penetrating trough the sliding sleeve, the end of the connecting rod is provided with a stopping block, thereby preventing the connecting rod from being drawn out of the sliding sleeve. The cross section of the connecting rod has a circular, oval or semi-circular shape.

The number of the connecting rods is 3 to 5. Each connecting rod is distributed on the outer wall of the tube uniformly or symmetrically. The length of the connecting rod is identical to or smaller than that of the lower section tube. The length of the lower section tube is larger than that of the upper section tube.

The upper section tube and the lower section tube are provided thereon with connecting surfaces that are mated with each other. After the upper section tube and the lower section tube are slidably connected to each other along the axis, the connecting surfaces are sealed tightly.

The outside of the upper section tube is provided with an eyepiece. The upper section tube is provided therein with a reflecting mirror.

The lower section tube is mounted on a support. The bottom inside the lower section tube is provided with an objective lens.

The length of the upper section tube is larger than that of the lower section tube. One end of the connecting rod is fixed outside the wall of the lower section tube, and the other end thereof penetrates into a sliding sleeve provided outside the wall of the upper section tube. The upper section tube can slide telescopically along the connecting rod. The length of the connecting rod is smaller than or identical to that of the upper section tube.

### BRIEF DESCRIPTION OF THE DRAWINGS

Fig. 1 is a schematic view showing the structure and principle of a conventional Newtonian reflector;
Fig. 2 is a perspective view showing the structure of an embodiment of the present invention;
Fig. 3 is a perspective view showing another structure of the embodiment of the present invention;
Fig. 4 is an enlarged view showing the details of the portion I in Fig. 3;
Fig. 5 is another perspective view showing the structure of the present invention; and
Fig. 6 is an enlarged view showing the details of the portion K in Fig. 5.

### DETAILED DESCRIPTION OF THE INVENTION

In order to make the reader to further understand the characteristics and technical contents of the present invention, a detailed description related thereto will be explained with reference to the accompanying drawings. However, the drawings are illustrative only and are not used to limit the scope of the present invention.

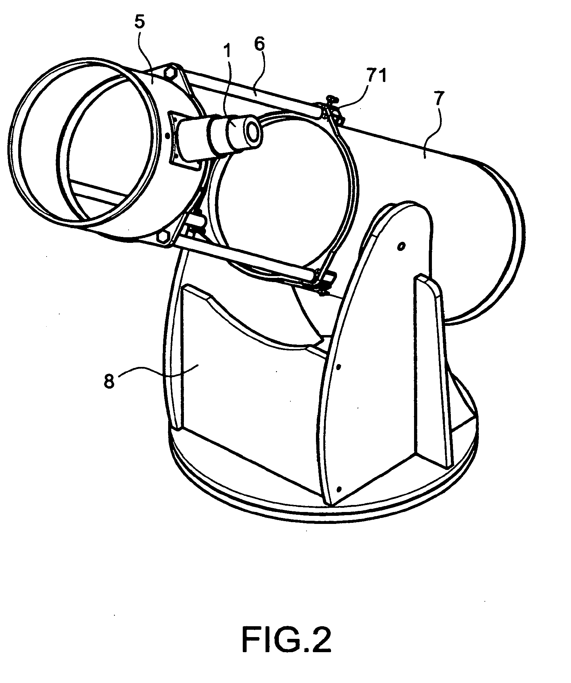

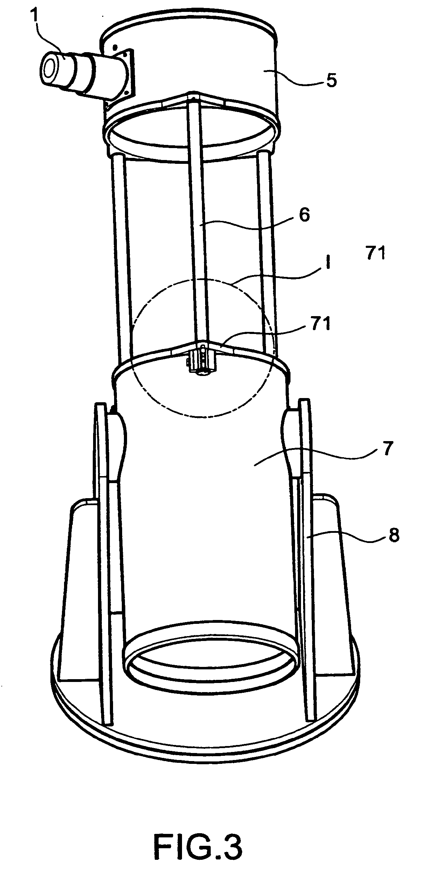

As shown in Figs. 2 and 3, the present invention provides a telescopic tube, which is constituted of an upper section tube 5, a plurality of connecting rods 6, a lower section tube 7 and a support 8. The outside of the upper section tube 5 is fixedly provided with an eyepiece 1. The interior of the upper section tube 5 is used to mount a planar reflecting mirror. The lower section tube 7 is mounted on the support 8 and can rotate with respect to the axis of the support. The bottom inside the lower section tube 7 is used to fix an objective lens. The upper section tube 5 and the lower section tube 7 are provided coaxially with each other. The length of the upper section tube 5 is approximately one third of the length of the lower section tube 7. The length of the connecting rod 6 is slightly smaller than that of the lower section tube 7. A lower outer wall of the upper section tube 5 is provided with three upper ends of the connecting rods 6 uniformly. The connecting rods 6 are provided in parallel to the axis of the tube. An upper outer wall of the lower section tube 7 is provided with three sliding sleeves 71 uniformly for allowing the connecting rods 6 to pass through. After the connecting rods 6 penetrate through the sliding sleeves 71 respectively, the distal end of each connecting rod 6 is provided with a stopping block to prevent the connecting rod from being drawn out of the sliding sleeve 71. Via the sliding sleeves 71, the upper section tube 5 together with the connecting rods 6 can slide telescopically in the axial direction of the tube.

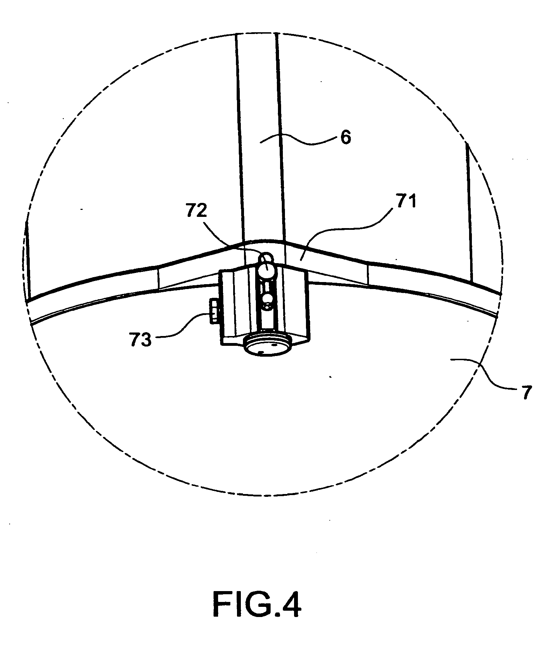

As shown in Fig. 4, the sliding sleeve 71 is provided thereon with a locking means 72. The main body of the locking means 72 is a bolt. The bolt is disposed in a screw hole provided on the sliding sleeve 71. One end of the bolt abuts against the connecting rod 6 within the sliding sleeve 71 during the advancing stage, thereby producing a fixing effect to the connecting rod 6. The other end of the bolt is provided with a handgrip for loosening or tightening the bolt. One side of the sliding sleeve 71 is further provided with an elastic positioning pin 73. An elastic telescopic head of the elastic positioning pin 73 extends into the sliding sleeve 71 to slidably connect to the connecting rod 6. The connecting rod 6 is provided thereon with positioning troughs for mating with the elastic telescopic head. When the connecting rod 6 extends to a certain length, the elastic telescopic head can be inserted into one of the positioning troughs to position the connecting rod 6. Therefore, in observation, an observer can loosen the bolt of the locking means 72, so that the three connecting rods 6 slide freely through the sliding sleeves 71 respectively. Then, the observer draws the upper section tube 5 in the axial direction of the tube, so that the upper section tube 5 and the connecting rods 6 can move collectively away from the lower section tube 7. When the connecting rods 6 extend to a preset length, the elastic telescopic head 73 of each elastic positioning pin is inserted into the positioning trough on the connecting rod 6, thereby restricting the connecting rod 6 preliminarily. Then, the bolt 6 of the locking means 72 is tightened to fix the connecting rod 6 and the sliding sleeve 71. At this time, the observer can adjust the angle of the tube so as to observe normally.

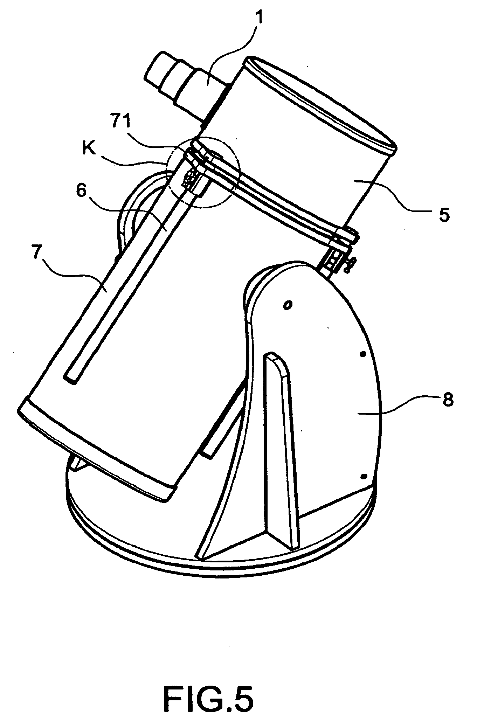

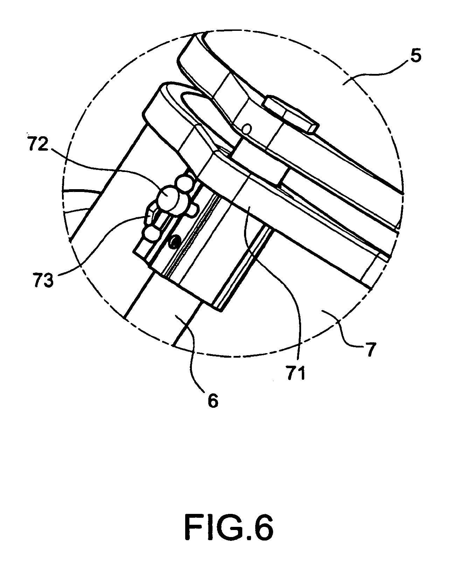

As shown in Figs. 5 and 6, when the observation or use is completed, the observer loosens the bolts of the locking means 72, so that the three connecting rods 6 can slide freely through the sliding sleeves 71. Then, the observer pushes the upper section tube 5 in the axial direction of the tube, so that the upper section tube 5 and the connecting rods 6 moves collectively toward the lower section tube 7. The lower end surface of the upper section tube 5 and the upper end surface of the lower section tube 7 can be connected with each other tightly. At this time, the observer tightens the bolts of the locking means 72 to lock the connecting rods 6 with respect to the sliding sleeves, thereby facilitating the storage and transferring operation.

Therefore, the telescopic tube of the present invention modifies the current single-piece tube to a telescopic structure that is constituted of an upper section tube, a lower section tube and connecting rods. As a result, the total length of the tube is the sum of the lengths of the upper section tube, the lower section tube and the connecting rod therebetween. The distance of extending or retracting the upper section tube with respect to the lower section tube is the length of each connecting rod. That is to say, the minimum limit can reduce one third of the total length of the tube, and the maximum limit can reduce almost one half of the total length of the tube, thereby reducing the accommodating space and weight of the tube efficiently and decreasing the difficulty in transferring operation.

The number of the connecting rods can be plural, preferably three. In order to prevent the connecting rods between the upper and lower section tubes are twisted due to a larger external force to affect the effect of observation, the connecting rods may have a construction of larger rigidness and non-circular section. Further, the sliding sleeve which is fixed on the tube correspondingly to allow the connecting rod to penetrate through is also arranged to mate with the shape of the connecting rod. The way of fixing the connecting rod is achieved by fixing it on the upper section tube, that is, one end of the connecting rod is fixed to the outer edge of the upper section tube. After being slidably inserted into the sliding sleeve provided on the outer edge of the lower section tube, the other end of the connecting rod is provided with a stopping block. In this way, when the upper section tube and the connecting rod are drawn together outwardly, the stopping block can prevent the connecting rod from separating from the lower section tube. The length of the upper section tube and the length of the lower section tube can be adjusted according to the actual length of the tube of the telescope, thereby realizing a reasonable length of the tube after retraction and thus facilitating the storage and transferring operation. For a tube of a larger length, if it is necessary to extend or retract to the maximum limit, the length of the upper section tube can be reduced as much as possible, thereby satisfying the mounting conditions of the eyepiece and the reflecting mirror. Preferably, the length of the lower section mates with the length of the connecting rod. In this way, not only the distance to which the tube can be extended and retracted is maximized, but also the connecting rod can be prevented from extending outside the wall of the lower section tube after the retraction of the tube if the length of the connecting rod is larger than that of the lower section tube. As a result, there is a possibility that the space of the tube cannot be reduced to a reasonable degree.

In the best structure, the length of the lower section tube is larger than that of the upper section tube, and the length of the connecting rod is slightly smaller than or identical to that of the lower section tube. On one hand, the lower section tube has to be fixed on the support, and on the other hand, such a structure can facilitate the extracting or retracting operation.

For the Newtonian reflector of a fixed focal distance, the length of tube is fixed. Therefore, when in use, the extension length of the connecting rod should be constant. Therefore, the maximum extension length of the connecting rod can be designed as the extension length necessary for the tube. Then, the locking means provided on the sliding sleeve is used to lock the connecting rod. The locking means can be a bolt. The bolt can be screwed forwardly to abut the connecting rod so as to be fixed with respect to the sliding sleeve, thereby locking the length of the tube. More preferably, the elastic positioning pin provided on the sliding sleeve or outside the connecting rod can be used, and the position of the elastic positioning pin is constant. The elastic telescopic head thereof is ejected and inserted into the positioning trough. At this time, the locking means can be used to position the connecting rod, so that the connecting rod can be fixed accurately and conveniently.

The axial retraction of the upper section tube with respect to the lower section tube can reduce the distance therebetween. At this time, the connecting surfaces thereof are connected with each other tightly, thereby preventing dust from entering the tube to affect the cleanness of the objective lens during the storage and transferring operation.

The present invention has advantageous effects as follows. The telescopic tube is designed reasonably. Not only the length of the Newtonian reflector can be reduced effectively for facilitating the storage and transferring operation, but also the weight of the tube can be reduced. The range of extension or retraction can achieve 30% to 40% of the total length of the tube. The operation for extending and retracting the telescopic tube can be performed simply and rapidly, so that it can be applied to various kinds of lenses of the Newtonian reflector to enhance the convenience in carrying and transferring operation.

## Claims

1. A telescopic tube having an adjustable length, comprising:
- an upper section tube (5), wherein the outside of the upper section tube (5) is provided with an eyepiece, and the upper section tube (5) is provided therein with a reflecting mirror;
- a lower section tube (7) provided coaxially with the upper section tube (5), wherein the upper and the lower section tubes (5, 7) are able to slide telescopically in an axial direction of the tubes (5, 7), **characterized by**
- a plurality of connecting rods (6) connected between the upper and lower section tubes (5, 7) and in parallel to the axis of the tubes (5, 7), wherein the upper section tube (5) is fixed to one end of each of the connecting rods (6), the lower section tube (7) is provided on its outer edge with sliding sleeves (71) for allowing the connecting rods (6) to pass through respectively, the other end of each of the connecting rods (6) penetrates through the sliding sleeve (71) to slide therein in the direction of the axis of the tubes (5, 7), whereby the upper section tube (5) is able to slide telescopically together with the connecting rods (6) in an axial direction of the tubes (5, 7), and wherein the length of the connecting rod (6) is identical to or slightly smaller than that of the lower section tube (7) to prevent the connecting rods (6) from extending outside the wall of the lower section tube (7) after retraction of the tube.

2. The telescopic tube according to claim 1, wherein the sliding sleeve (71) is provided thereon with a locking means (72), the locking means (72) is a bolt that penetrates into a screw hole provided on the sliding sleeve (71) and mates with the screw hole, one end of the bolt abuts against the connecting rod (6) in the sliding sleeve (71), and the other end of the bolt is provided with a handgrip.

3. The telescopic tube according to claim 1, wherein the sliding sleeve (71) is provided thereon with an elastic positioning pin (73), an elastic telescopic head of the elastic positioning pin (73) extends into the sliding sleeve (71) and is slidably connected to the connecting rod (6), the connecting rod (6) is provided thereon with positioning troughs for mating with the elastic telescopic head, and the elastic telescopic head is inserted into one of the positioning troughs to position the connecting rod when the connecting rod (6) extends to a certain position.

4. The telescopic tube according to claim 1, wherein a lower outer wall of the upper section tube (5) is provided with an upper fixing sleeve, the upper fixing sleeve is fixed to one end of the connecting rod (6), an upper outer wall of the lower section tube (7) is provided with a lower fixing sleeve, the lower fixing sleeve is provided thereon with a sliding sleeve (71) for allowing the connecting rod (6) to pass through, the end of the connecting rod (6) penetrating through the sliding sleeve (71) is provided with a stopping block, thereby preventing the connecting rod (6) from being drawn out of the sliding sleeve (71), the cross section of the connecting rod (6) has a circular, oval or semi-circular shape.

5. The telescopic tube according to claim 1, wherein the number of the connecting rods (6) is 3 to 5, each connecting rod (6) is distributed on the outer wall of the tube uniformly or symmetrically, the length of the lower section tube (7) is larger than that of the upper section tube (5).

6. The telescopic tube according to claim 1, wherein the upper section tube (5) and the lower section tube (7) are provided thereon with connecting surfaces that are mated with each other, after the upper section tube (5) and the lower section tube (7) are slidably connected to each other along the axis, the connecting surfaces are sealed tightly.

7. The telescopic tube according to claim 1, wherein the lower section tube (7) is disposed on a support (8), and the bottom inside the lower section tube (7) is provided with an objective lens.

## Patentansprüche

1. Teleskoprohr mit einstellbarer Länge, das umfasst:
- ein Rohr (5) eines oberen Abschnitts, wobei die Außenseite des Rohrs (5) des oberen Abschnitts mit einem Okular versehen ist und wobei das Rohr (5) des oberen Abschnitts innen mit einem reflektierendem Spiegel versehen ist;
- ein Rohr (7) eines unteren Abschnitts, das koaxial zu dem Rohr (5) des oberen Abschnitts vorgesehen ist, wobei die Rohre (5, 7) des oberen und des unteren Abschnitts in axialer Richtung der Rohre (5, 7) teleskopartig gleiten können, **gekennzeichnet durch**
- mehrere Verbindungsstangen (6), die zwischen dem Rohr (5) des oberen Abschnitts und dem Rohr (7) des unteren Abschnitts und parallel zu den Achsen der Rohre (5, 7) verbunden sind, wobei das Rohr (5) des oberen Abschnitts an einem Ende jeder der Verbindungsstangen (6) befestigt ist, das Rohr (7) des unteren Abschnitts an seiner Außenkante mit Gleithülsen (71) versehen ist, um zuzulassen, dass sich die Verbindungsstangen (6) jeweils hindurchbewegen, das andere Ende jede der Verbindungsstangen (6) **durch** die Gleithülse (71) verläuft, um darin in Richtung der Achse der Rohre (5, 7) zu gleiten, wobei das Rohr (5) des oberen Abschnitts zusammen mit den Verbindungsstangen (6) in einer axialen Richtung der Rohre (5, 7) teleskopartig gleiten kann und wobei die Länge der Verbindungsstange (6) gleich oder etwas kleiner als jene des Rohrs (7) des unteren Abschnitts ist, um zu verhindern, dass sich die Verbindungsstangen (6) über die Wand des Rohrs (7) des unteren Abschnitts hinaus erstrecken, wenn das Rohr zurückgezogen worden ist.

2. Teleskoprohr nach Anspruch 1, wobei an der Gleithülse (71) ein Verriegelungsmittel (72) vorgesehen ist, wobei das Verriegelungsmittel (72) ein Bolzen ist, der in ein Gewindeloch eindringt, das in der Gleithülse (71) vorgesehen ist, und an das Gewindeloch angepasst ist, wobei ein Ende des Bolzens an der Verbindungsstange (6) in der Gleithülse (71) anliegt und das andere Ende des Bolzens mit einem Handgriff versehen ist.

3. Teleskoprohr nach Anspruch 1, wobei an der Gleithülse (71) ein elastischer Positionierungsstift (73) vorgesehen ist, ein elastischer Teleskopkopf des elastischen Positionierungsstifts (73) sich in die Gleithülse (71) erstreckt und mit der Verbindungsstange (6) gleitend verbunden ist, an der Verbindungsstange (6) Positionierungsmulden vorgesehen sind, die an den elastischen Teleskopkopf angepasst sind, und der elastische Teleskopkopf in eine der Positionierungsmulden eingesetzt ist, um die Verbindungsstange zu positionieren, wenn sich die Verbindungsstange (6) in eine bestimmte Position erstreckt.

4. Teleskoprohr nach Anspruch 1, wobei eine untere Außenwand des Rohrs (5) des oberen Abschnitts mit einer oberen Befestigungshülse versehen ist, die obere Befestigungshülse an einem Ende der Verbindungsstange (6) befestigt ist, eine obere Außenwand des Rohrs (7) des unteren Abschnitts mit einer unteren Befestigungshülse versehen ist, an der unteren Befestigungshülse eine Gleithülse (71) vorgesehen ist, um zuzulassen, dass sich die Verbindungsstange (6) hindurch bewegt, das Ende der Verbindungsstange (6), das durch die Gleithülse (71) eindringt, mit einem Anschlagblock versehen ist, wodurch verhindert wird, dass die Verbindungsstange (6) aus der Gleithülse (71) herausgezogen wird, und der Querschnitt der Verbindungsstange (6) kreisförmig, oval oder halbkreisförmig ist.

5. Teleskoprohr nach Anspruch 1, wobei die Anzahl der Verbindungsstangen (6) im Bereich von 3 bis 5 liegt, alle Verbindungsstangen (6) an der Außenwand des Rohrs gleichmäßig oder symmetrisch verteilt sind und die Länge des Rohrs (7) des unteren Abschnitts größer ist als jene des Rohrs (5) des oberen Abschnitts.

6. Teleskoprohr nach Anspruch 1, wobei an dem Rohr (5) des oberen Abschnitts und an dem Rohr (7) des unteren Abschnitts Verbindungsoberflächen vorgesehen sind, die sich aneinander anschmiegen, nachdem das Rohr (5) des oberen Abschnitts und das Rohr (7) des unteren Abschnitts längs der Achse gleitend miteinander verbunden werden sind, wobei die Verbindungsoberflächen eng verbunden sind.

7. Teleskoprohr nach Anspruch 1, wobei das Rohr (7) des unteren Abschnitts an einem Träger (8) angeordnet ist und die Unterseite in dem Rohr (7) des unteren Abschnitts mit einer Objektivlinse versehen ist.

## Revendications

1. Tube télescopique ayant une longueur réglable, comprenant :
- un tube de section supérieur (5) tel que l'extérieur du tube de section supérieur (5) est dotée d'un oculaire, et le tube de section supérieur (5) est pourvu à l'intérieur d'un miroir réfléchissant ;
- un tube de section inférieur (7) prévu coaxialement avec le tube de section supérieur (5), tel que le tube de section supérieur et le tube de section inférieur (5, 7) sont capables de coulisser de façon télescopique dans une direction axiale des tubes (5, 7), **caractérisé par**
- une pluralité de tiges de connexion (6) connectées entre le tube de section supérieur et le tube de section inférieur (5, 7) et en parallèle à l'axe des tubes (5, 7), telles que le tube de section supérieur (5) est fixé à une extrémité de chacune des tiges de connexion (6), le tube de section inférieur (7) est pourvu sur sa bordure extérieure de manchons coulissants (71) pour permettre aux tiges de connexion (6) de les traverser respectivement, l'autre extrémité de chacune des tiges de connexion (6) pénétrant à travers le manchon coulissant (71) pour coulisser dans celui-ci dans la direction de l'axe des tubes (5, 7), grâce à quoi le tube de section supérieur (5) est capable de coulisser de façon télescopique conjointement avec les tiges de connexion (6) dans une direction axiale des tubes (5, 7), et dans lequel la longueur de la tige de connexion (6) est identique ou légèrement plus petite que celle du tube de section inférieur (7) pour empêcher aux tiges de connexion (6) de s'étendre à l'extérieur de la paroi du tube de section inférieur (7) après rétraction du tube.

2. Tube télescopique selon la revendication 1, dans lequel le manchon coulissant (71) est pourvu sur lui-même d'un moyen de blocage (72), le moyen de blocage (72) étant un boulon qui pénètre dans un trou à vis ménagé sur le manchon coulissant (71) et qui s'accouple avec le trou à vis, une extrémité du boulon venant buter contre la tige de connexion (6) dans le manchon coulissant (71), et l'autre extrémité du boulon est pourvue d'une manette manuelle.

3. Tube télescopique selon la revendication 1, dans lequel le manchon coulissant (71) est pourvu sur lui-même d'un ergot de positionnement élastique (73), une tête télescopique élastique de l'ergot de positionnement élastique (73) s'étendant dans le manchon coulissant (71) et étant connectée en coulissement à la tige de connexion (6), la tige de connexion (6) étant pourvue sur elle-même de goulottes de positionnement pour s'accoupler avec la tête télescopique élastique, et la tête télescopique élastique est introduite dans l'une des goulottes de positionnement pour positionner la tige de connexion quand la tige de connexion (6) s'étend vers une certaine position.

4. Tube télescopique selon la revendication 1, dans lequel une paroi extérieure inférieure du tube de section supérieur (5) est pourvue d'un manchon de fixation supérieur, le manchon de fixation supérieur étant fixé à une extrémité de la tige de connexion (6), une paroi extérieure supérieure du tube de section inférieur (7) est pourvue d'un manchon de fixation inférieur, le manchon de fixation inférieur étant pourvu sur lui-même d'un manchon coulissant (7) pour permettre à la tige de connexion (6) de le traverser, l'extrémité de la tige de connexion (6) pénétrant à travers le manchon coulissant (71) est pourvue d'un bloc d'arrêt, empêchant ainsi à la tige de connexion (6) d'être tirée hors du manchon coulissant (71), la section transversale de la tige de connexion (6) ayant une forme circulaire, ovale ou semi-circulaire.

5. Tube télescopique selon la revendication 1, dans lequel le nombre de tiges de connexion (6) est de 3 à 5, chaque tige de connexion (6) étant distribuée de façon uniforme ou symétrique sur la paroi extérieure du tube, la longueur du tube de section inférieur (7) étant plus élevée que celle du tube de section supérieur (5).

6. Tube télescopique selon la revendication 1, dans lequel le tube de section supérieur (5) et le tube de section inférieur (6) sont pourvus sur eux-mêmes de surfaces de connexion qui sont appariées l'une avec l'autre, après que le tube de section supérieur (5) et le tube de section inférieur (7) soient connectés en coulissement l'un à l'autre le long de l'axe, les surfaces de connexion sont scellées de façon étanche.

7. Tube télescopique selon la revendication 1, dans lequel le tube de section inférieur (7) est disposé sur un support (8), et le fond à l'intérieur du tube de section inférieur (7) est pourvu d'une lentille objectif.
